# FASCICULE DE BREVET EUROPEEN

(11) **EP 1 554 765 B1**
(45) Date de publication et mention de la délivrance du brevet: **19.05.2021**
(21) Numéro de dépôt: 03809226.8
(22) Date de dépôt: 23.10.2003
(51) Int. Cl.: H01M 4/96, H01M 4/90, C09C 1/46, C09C 1/56, C09D 7/62, H01M 4/36, H01M 4/587, C09D 5/24, H01M 4/62, C08K 3/04, C08K 9/04

(54) **PARTICULE COMPORTANT UN NOYAU A BASE DE GRAPHITE RECOUVERT D'AU MOINS UNE COUCHE CONTINUE OU DISCONTINUE, LEURS PROCEDES D'OBTENTION ET LEURS UTILISATIONS**
GRAPHITTEILCHEN MIT MINDESTENS KONTINUIERLICHER ODER DISKONTINUIERLICHER SCHICHT, IHRE VERFAHREN ZU DEREN HERSTELLUNG UND IHRE VERWENDUNGEN
PARTICLE COMPRISING A GRAPHITE CORE COATED WITH AT LEAST A CONTINUOUS OR DISCONTINUOUS COATING, METHOD FOR OBTAINING SAME AND USES THEREOF

(30) Priorité: 23.10.2002 CA 2409524
(43) Date de publication de la demande: 20.07.2005
(73) Titulaire: HYDRO-QUEBEC, Montréal, Québec H2Z 1A4 (CA)
(72) Inventeur: ZAGHIB, Karim, Longueuil, Québec J4M 2M7 (CA); CHAREST, Patrick, Sainte-Julie, Québec J3E 1P2 (CA); GUERFI, Abdelbast, Brossard, Québec J4X 1W2 (CA); PERRIER, Michel, Montréal, Québec H1T 3H8 (CA); KINOSHITA, Kimio, Cupertino, CA 95014 (US)
(74) Mandataire: Ipsilon
(86) Numéro de dépôt international: PCT/CA2003/001619
(87) Numéro de publication internationale: WO 2004/038834

(56) Documents cités:
- EP-A- 1 081 777
- US-A1- 2001 041 293
- PATENT ABSTRACTS OF JAPAN vol. 2003, no. 12, 5 décembre 2003 (2003-12-05) -& JP 2003 272630 A (DENSO CORP), 26 septembre 2003 (2003-09-26)
- ZHU Q ET AL: "Oxidation resistant SiC coating for graphite materials" CARBON, XX, XX, vol. 37, no. 9, 1999, pages 1475-1484, XP004172354 ISSN: 0008-6223
- GAJIWALA H M ET AL: "Hybridized resin matrix approach applied for development of carbon/carbon composites--I" CARBON, ELSEVIER SCIENCE PUBLISHING, NEW YORK, NY, US, vol. 36, no. 7-8, 1998, pages 903-912, XP004124155 ISSN: 0008-6223
- DR J STEIN AND AL: "Mechanofusion for high performance particles" CFI BER. DKG, PROCESS ENGINEERING, vol. 79, no. 4, janvier 2002 (2002-01), pages E11-E15, XP002315531
- DATABASE WPI Section Ch, Week 198207 Derwent Publications Ltd., London, GB; Class A14, AN 1982-13450E XP002315532 & SU 826 469 B (STUKACH A M) 30 avril 1981 (1981-04-30)
- DATABASE WPI Section Ch, Week 197635 Derwent Publications Ltd., London, GB; Class L02, AN 1976-65620X XP002315533 -& JP 51 080317 A (TOKAI CARBON KK) 13 juillet 1976 (1976-07-13)
- PATENT ABSTRACTS OF JAPAN vol. 003, no. 023 (C-038), 26 février 1979 (1979-02-26) & JP 53 149194 A (SHARP CORP), 26 décembre 1978 (1978-12-26)

## Description

### DOMAINE DE L'INVENTION

La présente invention est relative à de nouvelles particules constituées d'un noyau conducteur à base de graphite. Le noyau de ces particules est au moins partiellement enrobé à l'aide d'un deuxième matériau. La surface externe du noyau est recouverte en tout ou en partie par le deuxième matériau d'une nature et/ou d'une forme physique différente de celle du noyau.

La présente invention est également relative à des procédés permettant la préparation de mélanges homogènes de particules enrobées de l'invention, par cobroyage des particules destinées à en constituer le noyau avec les particules d'un agent fonctionnel interéactif. Les particules de l'agent fonctionnel interréactif possèdent une taille supérieure à celle des particules constitutives du noyau des particules enrobées de l'invention.

La présente invention est également relative aux utilisations de ce nouveau type de particules qui possèdent des propriétés électrochimiques et mécaniques particulièrement intéressantes notamment comme matériau constitutif d'électrodes pour générateurs électrochimiques et comme additif dans les peintures.

### ÉTAT DE LA TECHNIQUE.

Le brevet japonais portant le numéro P2000-51121 décrit une batterie secondaire à base de lithium composée d'une anode dont le composant principal est du carbone et une cathode dont le composant principal est un oxyde métallique de transition contenant du lithium et un électrolyte. Le matériau de cathode composant la cathode précédemment mentionnée contient une surface modifiée par du carbone couvert par une structure spinelle à base de Li₄Ti₅O₁₂. Ce matériau possède un voltage d'activité supérieur à 1,2 volts, et présente à ce voltage une passivation limitée. Ce matériau cathodique est obtenu en mélangeant un hydroxyde de lithium et un oxyde de titanium avec du carbone dans une solution colloïdale. Après séchage et solidification, le mélange est traité à une température comprise entre 400° et 1000° Celsius dans une atmosphère non oxydante.

Le brevet US-A-5.521.026 décrit la préparation de dispersions polymériques comportant de grandes quantités de particules solides non conductrices, par cobroyage, en présence d'un solvant non-polaires. Les films d'épandage obtenus pour les batteries à partir de ces dispersions polymériques sont plus uniformes et présentent une moindre porosité. L'article de Zhu Q. et al. (Carbon, 1999, 37(9), 1475-1484) décrit une méthode pour appliquer un revêtement de SiC sur des particules de graphite mettant en œuvre deux étapes successives de revêtement de ces particules de graphite, par deux mélanges différents à base de poudre de SiC. Le premier revêtement est constitué d'un mélange résultant du co-broyage d'une poudre de α-SiC, d'une poudre de graphite, d'un agent dispersant, d'un agent réticulant et d'un solvant.

La demande de brevet SU 826469 décrit un procédé de préparation de granules de graphite par broyage de particules de graphite puis par application d'une couche de cuivre électrolytique de 20 µm d'épaisseur dans un bain électrolytique en présence d'acide hydrofluoroborique et enfin par application du second revêtement à base d'étain.

La demande de brevet JP 51 080317 décrit un matériau à base de graphite comportant un revêtement de carbure de silice. Ce matériau est obtenu à partir de particules de coke de pétrole qui sont malaxées avec un agent liant pour conduire à une pâte qui est ensuite moulée, chauffée et graphitisée sur laquelle on applique une couche de carbure de silice. La demande de brevet EP 1 081 777-A2 décrit un matériau d'électrode négative comprenant un matériau actif constitué d'étain et d'un autre élément choisi parmi les éléments ne permettant pas le stockage des ions lithium, ledit matériau actif étant enrobé, au moins en partie, par une couche d'un matériau conducteur de l'électricité. Cette couche peut être déposée sur le matériau actif par immersion de celui-ci dans une solution de

l'élément constitutif du matériau dans un solvant ou par mécano-fusion.

L'article de Dr. J. Stein et al (Process Engineering 2002, vol. 79, n°4, E11-E15) décrit un procédé de mécano-fusion pour l'enrobage de particules de graphite.

Les procédés connus à ce jour pour la préparation de particules enrobées présentent notamment les inconvénients suivants :
- l'utilisation d'importantes quantités de solvants toxiques ;
- une durée très longue de mise en œuvre du procédé ;
- des coûts très élevés notamment dans le cas de procédés utilisant des techniques de déposition par plasma ;
- un manque de polyvalence en ce qui concerne la diversité des particules enrobées qui peuvent être préparées par mise en œuvre d'un même procédé ;
- des problèmes d'agglomération et de très grande dispersion granulométrique au niveau des particules préparées ; et
- une limitation en ce qui concerne l'épaisseur de l'enrobage qui peut être déposé sur le noyau.

Les particules enrobées connues à ce jour présentent notamment l'inconvénient de présenter une porosité non uniforme qui est préjudiciable à la puissance des batteries incorporant de tels matériaux.

Il existait donc un besoin pour un nouveau procédé permettant la préparation de particules enrobées et dépourvu d'un moins un des inconvénients des procédés de l'art antérieur.

Il existait également un besoins pour des mélanges de nouvelles particules enrobées possédant au moins une des propriétés suivantes :
- une distribution homogène ;
- l'absence de petites particules (fines) ;
- une bonne capacité, électrochimique;
- une bonne sécurité lors de leur incorporation dans des batteries et
- une bonne stabilité mécanique de l'enrobage.

### BREVE DESCRIPTION DES FIGURES

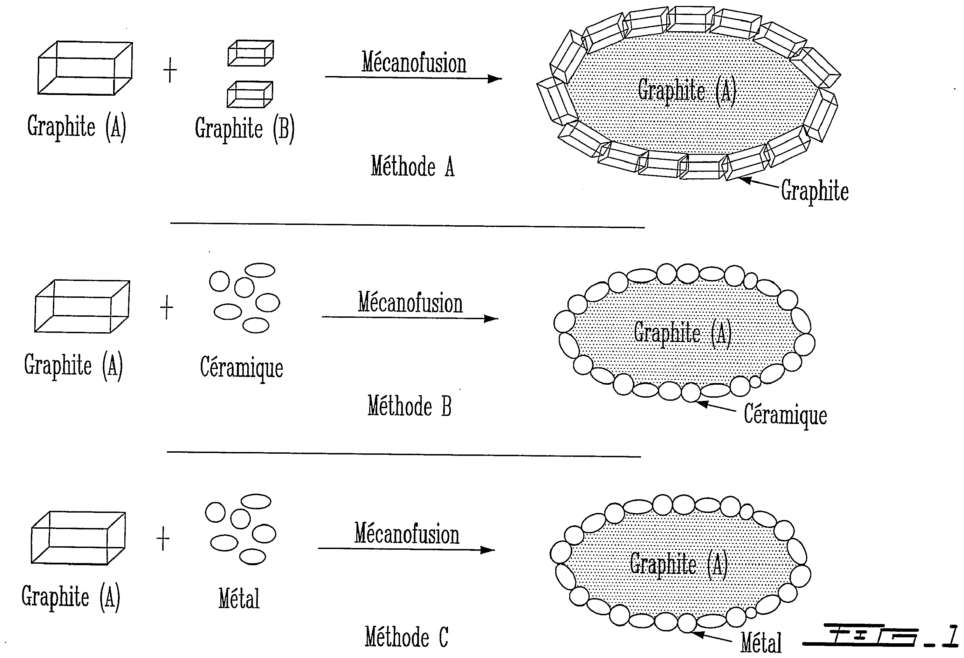

**Figure 1****:** cette figure illustre de façon schématique 3 modes distincts de mise en œuvre d'un procédé selon la présente invention qui permettent l'enrobage d'une particule de graphite par différents matériaux et par la méthode de mécanofusion.
   La méthode A schématise l'enrobage par des particules de graphite de petite taille (B) sur un graphite de grande taille (A) et de forme prismatique.
   La méthode B schématise l'enrobage d'un même graphite par de la céramique.
   La méthode C schématise l'enrobage d'un même graphite par des particules métalliques.

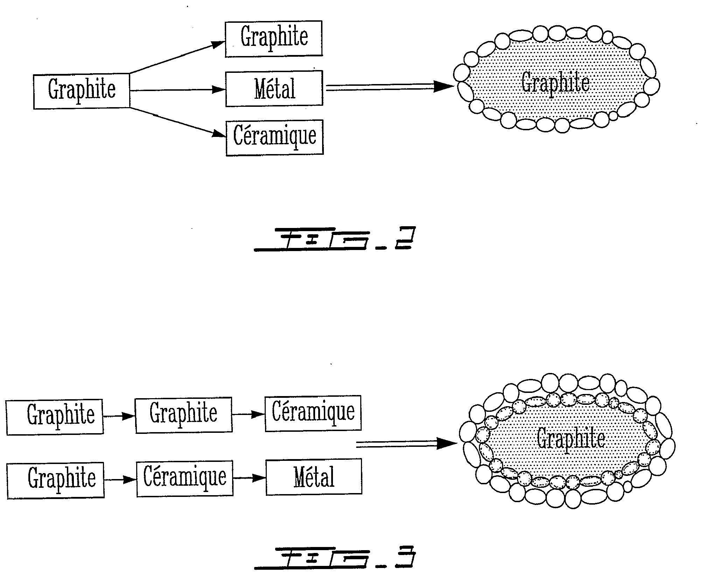

**Figure 2****:** cette figure représente, de façon schématique, le principe d'enrobage du graphite par différents types de matériaux: graphite, céramique et métal.
**Figure 3****:** cette figure représente, de facon schématique, l'enrobage du graphite par une multicouche de matériaux tels un métal, une céramique ou un graphite ainsi que l'enrobage par des couches constituées de mélanges de ces matériaux.

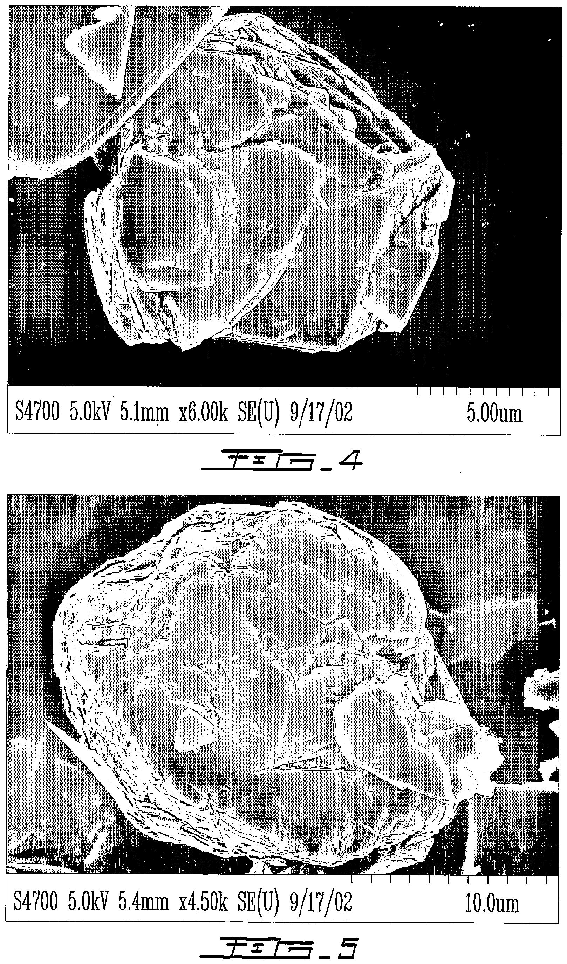

**Figures 4 et 5****:** ces figures sont des photos réalisées au microscope électronique à balayage (MEB) et montrant l'enrobage d'un graphite de taille de 20 micromètres, par un graphite de taille comprise respectivement entre 3 et 5 micromètres en utilisant la méthode de mécanofusion.
**Figures 6A et 6B** sont des photos au MEB des particules enrobées selon l'invention obtenues dans l'exemple A.
**Figures 7A et 7B** sont des photos au MEB des particules enrobées selon l'invention obtenues dans l'exemple C.
**Figures 8A et 8B** sont des photos au MEB des particules enrobées obtenues dans l'exemple F.
**Figures 9A et 9B** sont des photos au MEB des particules enrobées obtenues dans l'exemple G.

### RÉSUMÉ DE L'INVENTION

La présente invention est relative à un procédé qui permet la préparation de particules constituées d'un noyau conducteur comportant au moins un graphite enrobé au moins partiellement sur sa surface par cobroyage avec des plus petites particules d'un agent fonctionnel interréactif d'une taille déterminée et d'une nature et/ou d'une forme différente de celle du noyau de la particule enrobée.

Les particules ainsi obtenues présentent des propriétés électrochimiques particulièrement intéressantes et sont avantageusement utilisées notamment comme matériau isolant ou conducteur pour électrodes de générateur électrique.

### DÉFINITION GÉNÉRALE DE L'INVENTION

**Un premier objet** de la présente invention est constitué par un procédé permettant la préparation d'un mélange homogène de particules comportant un noyau conducteur à base de graphite dont la surface est au moins partiellement enrobée, de préférence pour au moins 10 %, plus préférentiellement encore pour au moins 80 %, par un enrobage à base un matériau différent dans sa composition ou dans sa forme physique de celui qui constitue le noyau.

De façon avantageuse, le mélange homogène de particules enrobées obtenu est caractérisé par une distribution granulométrique à un seul pic, obtenue de préférence lorsqu'on fait une mesure de granulométrique à l'aide de l'appareil Microtrac XI00 de la société MICROTRAC et/ou par un taux de conversion ≥ 90 %.

Le procédé comporte au moins une étape de cobrayage des particules destinées à constituer le noyau des particules enrobées, appelées particules-noyau et dont la taille moyenne est X, par des particules d'au moins un agent fonctionnel interréactif ayant une taille moyenne Y inférieure à la taille X.

De façon avantageuse, les particules-noyau, ainsi que les particules-enrobage utilisées présentent une faible dispersion granulométrique qui est de préférence de [-50%, + 50%]. C'est-à-dire que les mélanges de particules X et de particules Y, correspondants ne contiennent pas de particules dont la taille est supérieure ni inférieure pour plus de 50 % à la tailles X, respectivement à la taille Y.

Dans le cadre de la présente invention l'expression particule-noyau comportant au moins un graphite se rapporte aux particules constitutives du noyau des particules enrobées de l'invention et elles sont constituées d'au moins un graphite. La taille de ces particules varie avantageusement de 1 à 50 micromètres, et elle est de préférence de l'ordre de 20 micromètres.

Le graphite présent dans le noyau des particules enrobées est indifféremment un graphite naturel ou synthétique ou un mélange d'au moins deux de ces derniers.

Dans le cadre de la présente invention l'expression agent fonctionnel interactif se rapporte à un matériau organique ou inorganique ou à un mélange de ces derniers. Ce matériau assure une fonction double qui se manifeste par une transformation chimique et par une transformation physique des éléments qu'il contient. Ainsi se produit la modification de la surface du noyau par enrobage par une couche d'un matériau sélectionné et la formation de liaisons chimiques au niveau de la surface du noyau. Il y a donc une transformation de l'agent fonctionnel interréactif en une forme liée à la structure du noyau, mais aussi une transformation à l'intérieur de la structure par exemple dans le cas des siloxanes qui se transforment par chauffage et perte de l'oxygène, au cours du cobroyage, en silice.

Dans le cadre de la présente invention, l'expression taille moyenne de particules correspond à la valeur de la mi-hauteur à 50 % (d50) du pic de distribution.

On peut également utiliser comme agent fonctionnel interactif. Les graphites ayant une forme physique différente de celle du noyau mais appartenant à la même classe de cristallinité soit haute, c'est-à-dire pour un d₀₀₂ inférieur ou égal à 340, soit faible c'est-à-dire avec d₀₀₂ supérieur à 340. À titre d'exemple, lorsque les particules-noyau sont de forme sphérique ou prismatique ou un mélange de ces deux, alors les particles-enrobage peuvent être par exemple de forme fibre, C60 ou C70.

Comme agent fonctionnel interréactif on peut également utiliser les céramiques. On utilise de préférence les céramiques de type TiO₂, Al₂O₃, ZrO₂, SiC, Si₃N₄. Celles de type TiO₂, et/ou ZrO₂ et plus particulièrement celles ayant une granulométrie comprise entre 10 et 500 nanomètres qui représentent une variante particulièrement intéressante.

On peut également utiliser les sels fluorés tels que LiF ou les fluorures d'alcalins-terreux tels que (LiF)CaF₂.

Les métaux et les alliages sont également utilisables. Parmi les alliages, ceux de type métallique et plus particulièrement encore les alliages métalliques contenant un des éléments du groupe constitué par Si, Sn, Ag et Al sont d'un intérêt particulier.

On peut également utiliser comme agent fonctionnel interéactif: les oxydes, de préférence les oxydes de type MgO, Li₂CO₃ et SiO₂, et les oxydes de silicium qui se révèlent particulièrement intéressants.

L'agent fonctionnel interréactif peut être choisi dans le groupe constitué par les polymères à l'état solide à température ambiante.

On retient de préférence:
- les polymères à quatre branches ayant de préférence des terminaisons hybrides, plus préférentiellement encore ceux ayant des terminaisons hybrides acrylates (de préférence méthacrylate) et alkoxy (de préférence alkoxy avec de 1 à 8 atomes de carbone, plus préférentiellement encore méthoxy ou éthoxy), ou encore vinyl; une branche au moins (et de préférence au moins deux branches) dudit polymère à quatre branches étant susceptible(s) de donner lieu à une réticulation;
- les polyoxydes de propylène et les polyoxydes d'éthylène d'un poids moléculaire moyen variant avantageusement de 150 à 20.000; et
- les polysiloxanes ([Si(R)-O]-) tels que ceux de type poly(dimethyl)siloxane, poly(ethoxysiloxane), poly(octamethyl)trisiloxane, ayant de préférence un poids moléculaire variant de 150 à 10.000, plus préférentiellement encore les polyoxysiloxanes de type Poly(dimethylsiloxane-co-methylphenylsiloxane) ayant de préférence un poids moléculaire d'environ 800; et
- les mélanges d'au moins deux de ces derniers. Les polymères à quatre branches sont définis plus en détail dans la demande PCT WO/0363287

Des mélanges d'agents fonctionnels interactifs peuvent également être utilisés pour la mise en œuvre du procédé de l'invention. Ainsi à titre d'exemples, les deux mélanges suivant constitués par :
- 60 % de Poly(diméthylsiloxane) et par 40 % de HO₂, et
- 54 % de Poly(diméthylsiloxane), 36 % de TiO₂ et 10 % de H₂CO₃.

La taille X des particules constitutives du noyau et celle Y des particules utilisées pour constituer l'enrobage du noyau vérifient la relation Y/X < 1. De préférence X est supérieur d'au moins 150 %, et de préférence d'au moins 200 % à Y. Cette caractéristique joue un rôle important en ce qui concerne l'uniformité des mélanges de particules enrobées obtenues.

Selon un mode avantageux de réalisation de l'invention, les particules de taille X et/ou celles de taille Y utilisées possèdent une forme physique de type cylindrique, prismatique et/ou de palette.

L'étape de cobroyage est réalisée de préférence sous atmosphère inerte de façon à diminuer les risques d'évaporation du carbone due à la formation de CO₂.

L'atmosphère inerte retenue est de préférence constitué par un ou plusieurs gaz inertes. De préférence on utilise une atmosphère constituée d'un gaz choisi dans le groupe constitué par l'argon et l'azote et les mélanges de ces gaz, plus préférentiellement encore en présence d'argon substantiellement pur.

L'étape de cobroyage du procédé de l'invention est réalisée avantageusement à une température comprise entre 20 et 1.000 °Celsius, et de préférence à une température comprise entre 25 et 800 °Celsius.

La durée de l'étape de cobroyage est avantageusement comprise entre 10 secondes et 4 heures. De préférence cette durée est comprise entre 60 secondes et 3 heures.

L'étape de cobroyage du procédé de l'invention peut être conduite à sec ou en présence d'eau ou d'un solvant organique. Ce solvant est avantageusement choisi dans le groupe constitué par les cétones, les alcènes, les alcanes, les alcools et les mélanges d'au moins deux de ces derniers.

De préférence on utilisera de l'eau, de l'acétone, du toluène, de l'heptane, du méthanol ou un mélange d'au moins deux de ces derniers.

L'eau en raison de son caractère non polluant est le solvant préféré.

Le solvant résiduaire est éliminé de préférence par extraction ou par évaporation à la fin de l'étape de cobroyage. Cette élimination du solvant est réalisée de préférence jusqu'à 90 %.

Le solvant est avantageusement ajouté avant le démarrage du cobroyage. Par exemple, on prépare un mélange des particule-enrobage et du solvant, puis on y ajoute, une fois le mélangé homogénéisé, les particules-noyau.

La quantité de solvant utilisée représente entre 1 et 10 % du poids des particules-enrobage soumises au co-broyage. De préférence, on utilise entre 2 et 5 % de solvant.

Selon une autre mode particulièrement avantageux de réalisation du procédé de l'invention, les tailles des particules sont choisies de telle manière que le rapport Y/X varie entre 0,17 et 0,6, de préférence ledit rapport varie entre 0,25 et 0,35.

Les techniques utilisées pour le cobroyage sont les méthodes habituellement utilisées dans la technique considérée. Ainsi lorsque le cobroyage est réalisé mécaniquement, on utilise, par exemple, le HEBM, le jet air-miling, la mécano fusion telle que celle de type Hosokawa, l'hybridization par exemple celle réalisée par mise en œuvre d'un système NHS-0 commercialisé par la société NAR- Japon et/ou par mise en œuvre d'une combinaison de ces techniques.

Selon un mode avantageux, le cobroyage est réalisé par mécanofusion à une vitesse de rotation de l'installation comprise entre 2.000 et 3.000 tours/minute, préférentiellement ladite vitesse de rotation est comprise entre 2.300 et 2.700 tours/minutes. Selon ce mode, la durée du cobroyage est avantageusement comprise entre 10 et 210 minutes, plus préférentiellement encore la durée est comprise entre 15 et 60 minutes.

Selon un autre mode avantageux de réalisation de l'invention, les particules du mélange obtenue ont une forme ellipsoïdale.

Avantageusement, la densité de compaction du mélange de particules obtenu par le procédé de l'invention est au moins 2 fois supérieure à celle du mélange initial des particules de taille X et de celles de taille Y utilisées au démarrage dudit procédé. De préférence, la densité de compaction du produit final est > 0,9g/cc, plus préférentiellement encore la densité de compaction est ≥ 1g/cc.

Le procédé de l'invention est avantageusement mis en oeuvre avec des particules de taille X qui possèdent une surface spécifique, mesurée à l'aide du microscope électronique à balayage, variant entre 1 et 50 m²/g, plus préférentiellement encore la surface spécifique est comprise entre 2 et 10 m²/g.

La surface spécifique (BET) des particules de taille Y varie entre 5 et 800 m²/g, de préférence elle varie entre 10 et 500 m²/g.

Lorsque l'enrobage des particules noyau est réalisé en utilisant des particules de céramique de taille moyenne Yc, on choisit préférentiellement ces particules de façon à ce que le rapport Yc/X soit inférieur à 1, et de préférence à ce que le rapport soit compris entre 0,0008 et 0,007.

Des résultats particulièrement intéressants sont obtenus avec des céramiques électroniquement conductrices. De telles céramiques sont de préférence choisies dans le groupe constitué par les nitrures, notamment TiN et GaN.

Lorsque l'on utilise une céramique électroniquement non-conductrice, cette dernière est choisie de préférence dans le groupe constitué par Al₂O₃ et BaTiO₃.

Lorsqu'on utilise une céramique électroniquement semi-conductrice, cette dernière est préférentiellement sélectionnée dans le.groupe constitué par SiC et BaTiO₃.

Selon une variante particulièrement intéressante de mise en œuvre du procédé de l'invention, on utilise comme agent fonctionnel interréactif des particules de céramique ayant une taille moyenne Yc telle que lOnm <Yc< 1µm, de préférence telle que 50nm <Yc< 150nm.

Lorsque les particules de taille moyenne Y sont des particules d'un alliage (ci-après appelées particules de taille Ya), elles sont avantageusement constituées au moins en partie de Al, Sn, Ag, Si ou d'un mélange d'au moins deux de ces derniers éléments et le rapport Ya/X est tel que 0,005 >Ya/X > 0,2, de préférence ledit rapport vérifie la relation 0,007 >Ya/X > 0,0008.

**Un second objet** de la présente invention est constitué par les particules enrobées susceptibles d'être obtenues par l'un des procédés constitutifs du premier objet de la présente invention.

Les particules sont obtenues selon la revendication 31.

Ces particules comportent un noyau conducteur, constitué d'au moins un graphite, enrobé de façon continue ou discontinue par au moins une couche obtenue à partir d'un agent fonctionnel interréactif sélectionné dans le groupe constitué par les graphites d'une nature et/ou d'une forme différente de celle constituant le noyau mais de même cristallinité, les céramiques, les métaux et les alliages, notamment les alliages de type métallique ainsi que les mélanges d'au moins deux de ces derniers.

Parmi ces particules, celles dont le noyau est constitué d'un graphite d'une pureté supérieure à 95 % sont particulièrement intéressantes en ce qui concernent leur propriétés électrochimiques. Pour l'optimisation des propriétés électrochimiques il est en effet important, lorsque des impuretés sont présentes dans le noyau, qu'elles n'interfèrent pas avec les propriétés électroniques de ladite particule enrobée.

Ainsi, selon un autre mode particulier de réalisation des particules, on réalise un enrobage qui neutralise les interférences électroniques générées par les impuretés présentes dans le noyau de graphite. Un tel enrobage protecteur est constitué par un matériau différent de la ou des impureté(s) présente(s) dans le noyau de graphite et susceptibles de générer de générer des réactions parasitaires. À titre d'exemple d'impuretés susceptibles d'être présentes dans le noyau de graphite: on peut mentionner celles de type Al₂O₃, SiO₂, oxyde de fer ou soufre.

Les particules enrobées de l'invention présentent de préférence une taille comprise entre 7 et 100 micromètres, de préférence la taille du noyau est comprise entre 10 et 30 micromètres et l'enrobage du noyau est avantageusement en graphite et d'une épaisseur moyenne comprise entre 1 et 5 micromètres.

Une autre sous-famille particulièrement intéressantes de particules de l'invention est constituée par les particules dans lesquelles l'enrobage du noyau est constitué par une céramique d'une épaisseur moyenne comprise entre 50 et 150 nanomètres.

Une autre sous-famille particulièrement intéressante de particules selon l'invention est constituée par les particules, dans lesquels le noyau est recouvert de deux couches successives continues et/ou discontinues, chacune des couches ayant de préférence des épaisseurs respectives E₁ et E₂ comprises entre 50 nanomètres et 5 micromètres, par des étapes successives de cobroyage. Ces particules à enrobage double sont préparées par mise en oeuvre de deux cobroyages successifs. Les particules enrobées obtenues dans la première étape de cobroyage jouent maintenant le rôle de "noyau" et les particules-enrobage utilisées pour réaliser le deuxième enrobage sont d'une taille sensiblement inférieure à la taille des particules enrobées une première fois. Les autres conditions opératoires du second cobroyage restent sensiblement similaires.

Deux couches successives peuvent être constituées d'un matériau différent.

À titre d'exemple, une sous-famille de particules à multi-enrobage, selon l'invention est constituée par les particules dont le noyau est recouvert de trois couches, chacune des 3 couches ayant respectivement une épaisseur E₁, E₂, E₃ comprise de préférence entre 50 nanomètres et 5 micromètres et les épaisseurs des trois couches étant telles que leur somme est de préférence inférieure à 10 micromètres. Dans ces particules à trois couches chacune des 3 couches peut être constituée d'un matériau différent. À noter que la même approche est applicable pour la préparation de ces particules à 3 enrobages que dans le cas des particules à 2 enrobages, à la différence que l'on réalise une étape supplémentaire de cobroyage de la particule-noyau à double enrobage par des particules-enrobage d'une taille sensiblement inférieure à la taille des particules à double enrobage. Les autres conditions opératoires pour le troisième cobroyage restent sensiblement les mêmes.

Les particules à enrobage multiple ainsi préparées présentent des propriétés électrochimiques et mécaniques particulièrement intéressantes, notamment en ce qui concerne la capacité électrochimique et la sécurité de fonctionnement des batteries qui les incorporent, et ce, grâce à l'absence d'exothermes importants.

Les particules constituées d'un cœur de graphite recouvert au niveau de sa surface externe pour au moins 80 % par ledit enrobage présentent d'excellentes propriétés électroniques.

Les mélanges de particules de la présente invention présentent d'excellentes propriétés électriques et notamment une conductivité électronique pouvant varier entre 10⁻²² et 10³ Ohm⁻¹.cm⁻¹.

Dans le cas de mélanges de particules dans lequel le noyau est constitué de graphite et l'enrobage est de type métallique, on mesure une conductivité électronique supérieure à 300 Ohm⁻¹.cm⁻¹.

Dans le cas de mélange de particules dans lequel l'enrobage est constitué d'aluminium, la conductivité électronique mesurée est supérieure à 350 Ohm⁻¹.cm⁻¹ et atteint même dans la majorité des cas des valeurs supérieures à environ 377x 103 Ohm⁻¹.cm⁻¹.

**Un troisième objet** de la présente invention est constitué par l'utilisation des particules enrobées selon le deuxième objet l'invention comme matériau isolant ou conducteur pour électrodes de générateurs électriques.

Selon un mode avantageux, on utilise des particules enrobées de CeO₂, Li₃PO₄, de graphite-Ag, Li₂CO₃ et/ou de MgO-graphite, Li₂Co₃-LiF dans les piles à combustible. Les particules jouant, dans cette application, le rôle de stockage d'énergie.

**Un quatrième objet** de la présente invention est constitué par l'utilisation des particules enrobées de l'invention, notamment de polymères-graphites dans des revêtements, de préférence dans les peintures. Les particules enrobées jouant dans cette application le rôle d'additifs renforçant notamment les propriétés mécaniques du film de peinture formé.

### Définition de modes préférentiels de l'invention

Un co-broyage du graphite, en forme de fibres, par du graphite en forme de sphères est obtenu par mélange d'un graphite de taille de particule de 20µm avec un autre graphite ayant une taille de particules qui varie de 2 à 7µm. Ce cobrayage est obtenu par un mélange à sec ou par voie solvant en utilisant un ball mill à haute énergie "HEBM" de Spex, par mécanofusion de type Hosokawa ou par «hybridization» de type Nara. La particule de graphite naturel ou artificiel, de forme prismatique à l'origine, passe par une nouvelle forme ellipsoïdale. Le mélange de Li₂Ti₂O₃ avec du graphite de taille de particule de 20µm. Ce mélange est obtenu par HEBM dans un milieu sec ou liquide ou par mécanofusion. La densité de compaction (tap density) du mélange et la particule finale se transforme en forme ellipsoïdale. Le mélange du cobroyé à trois éléments est formé par du graphite naturel de 20µm avec une poudre métallique de type Sn et avec une céramique de type Li₂Ti₂O₃. Le mélange graphite-métal est cobroyé par HEBM (sec ou dans un solvant) ou par mécanofusion ou par hybridization, la particule se transforme en forme ellipsoïdale.

On constate ainsi une augmentation de la tap densité de l'électrode (généralement exprimée en grammes par cm³), la cinétique et l'intercalation du lithium dans le graphite.

### EXEMPLES

Les exemples suivants sont donnés à titre purement illustratif et ne sauraient être interprétés comme constituant une quelconque limitation de l'invention.

### Méthode A : Cobroyage du graphite par le graphite

La particule cœur de graphite naturel à une taille moyenne de 20µm et il est d'une forme prismatique. Ce graphite est mélangé avec du graphite de forme sphérique et présentant une taille de particule qui varie entre 2 et 7µm. Les particules du graphite de petite taille servent à l'enrobage des particules du graphite de 20µm. Le cobroyage est obtenu par HEBM ou par mécanofusion (de type Hosokawa).

### Méthode B : Cobroyage du graphite par la céramique.

Le cobroyage est effectué par un mélange de graphite naturel de taille de 20µm et de forme prismatique avec 10% de Li₂Ti₂O₇ de taille de particule inférieure à 1µm (sub-micron). Le graphite naturel est enrobé par les particules de céramique, ce qui rend sa forme ellipsoïdale. Ce cobroyage est obtenu par HEBM ou par mécanofusion (de type Hosokawa).

Les propriétés électroniques de la céramique n'affectent pas la transformation de la particule prismatique vers la forme ellipsoïdale du cobroyé. Le potentiel d'intercalation du lithium dans la céramique, qui enveloppe le graphite, est superposé au potentiel de l'intercalation du lithium dans le graphite.

### Méthode C : Cobroyage du graphite par un métal

Cette méthode utilise du graphite naturel de 20µm de forme prismatique mélangé avec 20% d'une poudre nanométrique d'étain (Sn). Ce mélange est broyé par mécanofusion de type Hosokawa. Ainsi la forme prismatique du graphite est changée en une forme ellipsoïdale. L'insertion du lithium dans le métal Sn induit un alliage (LixSny) ayant un potentiel plus élevé par rapport à celui de l'intercalation du lithium dans le graphite. La formation de l'alliage métallique donne lieu à un supplément de capacité massique (mAh/g) et volumique (mAh/1) à l'électrode. Ainsi la densité d'énergie massique (Wh/kg) et volumique (Wh/1) de la batterie est augmentée.

### Exemple :

Un graphite naturel brésilien ayant une taille de particule de 350µm (souche) est réduit à 20µm par Jet-milling (graphite-A). Le graphite B a une taille de particule variant de 2 à 10µm, obtenu par jet milling du graphite souche. La densité de compaction des graphites A et B est environ 0,35g/cc.

Un mélange de 80% du graphite A et 20% du graphite B est introduit dans la mecanofusion de type Hosokawa modèle AMS-Lab pendant 30 minutes. Le produit obtenu à une densité de compaction de 0,75g/cc et une forme ellipsoïdale.

Il apparaît donc, dans le cas de l'intercalation dans un graphite naturel ou artificiel, que la cinétique du lithium est limitée par la forme prismatique des particules de ces matériaux (1). Dans ces matériaux, la fraction des plans basais **f_{b}** est dominante par rapport à la fraction edge **fₑ.** Leur densité de compaction est faible (0,2-0,3g/cc) à cause de la forme de prismatique de leurs particules. Ainsi, la cinétique et la diffusion du lithium dans le graphite ont été augmentées par transformation de la forme prismatique en une forme ellipsoïde. Cette forme ellipsoïdale réduit la fraction **f_{b}** qui apparaît représenter la barrière limitante à l'intercalation du lithium dans les graphites;

Cette forme ellipsoïdale avantageuse a ainsi été obtenue à titre illustratif par les trois méthodes ci-avant décrites, et qui plus est, avec un minimum de matériaux de départ.

### Exemple A - enrobage à base de Li₂CO₃

Un mélange constitué par 500 grammes de particules d'un graphite de type est utilisé comme premier composant de départ.

Les particules du mélange qui ont une taille moyenne de 20 microns et une forme prismatique (NG20) sont traitées par à l'aide d'un dispositif de mécanofusion tel que ceux commercialisés par la société Hosokawa au Japon) pendant 15 minutes à une température de 25 degrés Celsius.

Sous l'effet du traitement, la surface des particules de graphite est modifié et résulte en une forme sphérique, le mélange ainsi obtenu est qualifié de graphite SNG20.

45 grammes du mélange de SNG20 sont mélangés avec 5 grammes de Li₂CO₃ (µ) puis traité pendant 25 secondes à l'aide d'un hybridezer commercialisé par la société NARA au Japon.

Les particules de graphite ainsi obtenues comportent un enrobage comportant 10 % de carbonate de lithium (Li₂CO₃) et 90 % de graphite.

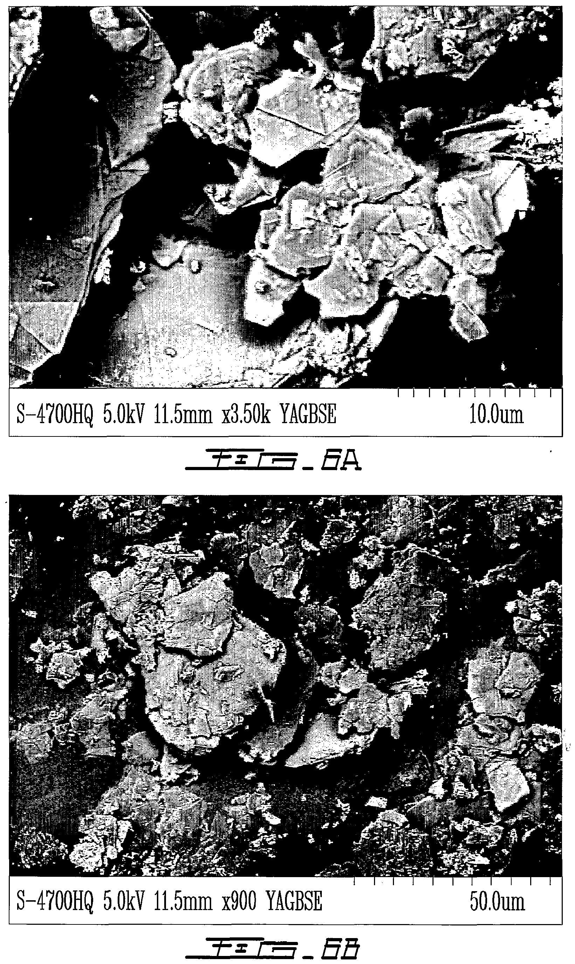

Les photos de ces particules sont les Figures 6A et 6B.

### Exemple B (enrobage de Li₂CO₃+ LiF)

45 grammes du mélange SNG20 sont mélangés à 2.5 grammes de Li₂CO₃ et à 2.5 grammes de LiF. Le mélange ainsi préparé est traité pendant 25 secondes à l'aide d'un hybridezer (NARA, Japon).

Les particules de graphite obtenues se caractérisent par un enrobage hybride composé de Li₂CO₃ et de LiF.

### Exemple C (enrobage de Si) : HEBM+MECANO+Hybridezer

Une poudre macroscopique constituée de particules de 2 microns de Si est broyée dans un Spex HEBM (High energy Ball milling) pendant 2 heures et résulte en une poudre nano de Si.

Un mélange constitué de 45 grammes de particules sphériques de graphite SNG20 est mélangé avec 5 grammes de Si (µ) puis traité pendant 25 secondes par un hybridezer (NARA, Japon).

Les particules de graphite ainsi obtenues comportent un enrobage à base de particules nano-Si, d'une taille inférieure à 500 nanomètres.

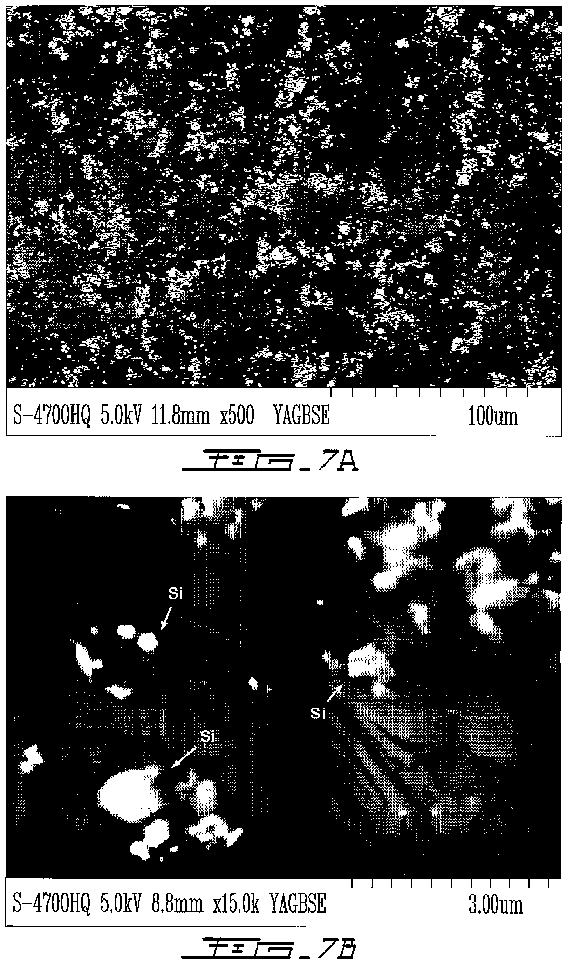

Les particules obtenues sont visibles sur les photos des Figures 7A et 7B

### Exemple D (enrobage de Si) : HEBM+MECANO

Une poudre macroscopique de 2 microns de Si est broyée dans un Spex HEBM (High energy Ball milling) pendant 2 heures pour obtenir du Nano Si.

Un mélange de 45 grammes de particules de graphite SNG20 est mélangé avec 5 grammes de particules de Si nano, pendant 15 minutes, par mecanofusion de (Hosokawa, Japon).

Les particule de graphite ainsi obtenues comportent un enrobage à base de particules Si-nano, d'une taille inférieure à 500 nanomètres.

### Exemple E (enrobage de Si) : HEBM+INOMISER+HYBRIDYSER

Une poudre macroscopique de particules de Silicium (Si) d'une taille moyenne de 2 microns est broyée dans un Spex HEBM (High energy Ball milling) pendant 2 heures et résulté en un mélange de particules de silicium.

45 grammes d'un mélange de particules de graphite SNG20 obtenu dans l'exemple A est mélangé avec 5 grammes de particules de silicium d'une taille moyenne de 500 manomètres, pendant 25 secondes, à l'aide d'un hybridezer (NARA, Japon).

### Exemple F (Synthèse en fonction d'huile de silicone)

Un mélange de particules de graphite SNG20 obtenu dans l'exemple A et d'huile de silicone dans la proportion massique de (10:90) est réalisé par HEBM.

Le mélange est chauffé pendant 4 heures sous atmosphère contrôlée (Argon).

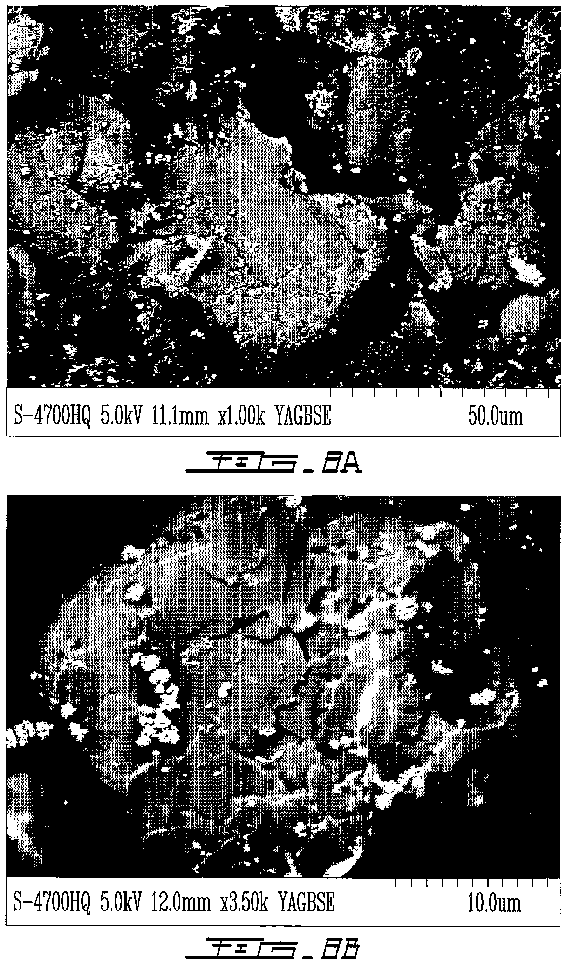

Les photos des particules enrobées ainsi obtenues sont identifiées Figures 8A et 8B.

### Exemple G (Synthèse de particules enrobées en fonction d'un alliage de polymère Siloxane et ERM)

Un mélange constitué par des particules de graphite de type SNG20 et d'un polymère hybride à 4 branches (PEO-PPO) Siloxane-ERM (1:1), de la compagnie DKS, dans la proportion massique (80:20) est préparé par HEBM.

Le mélange est chauffé pendant 4 heures sous atmosphère contrôlée (Argon), à une température de 500 degrés Celsius.

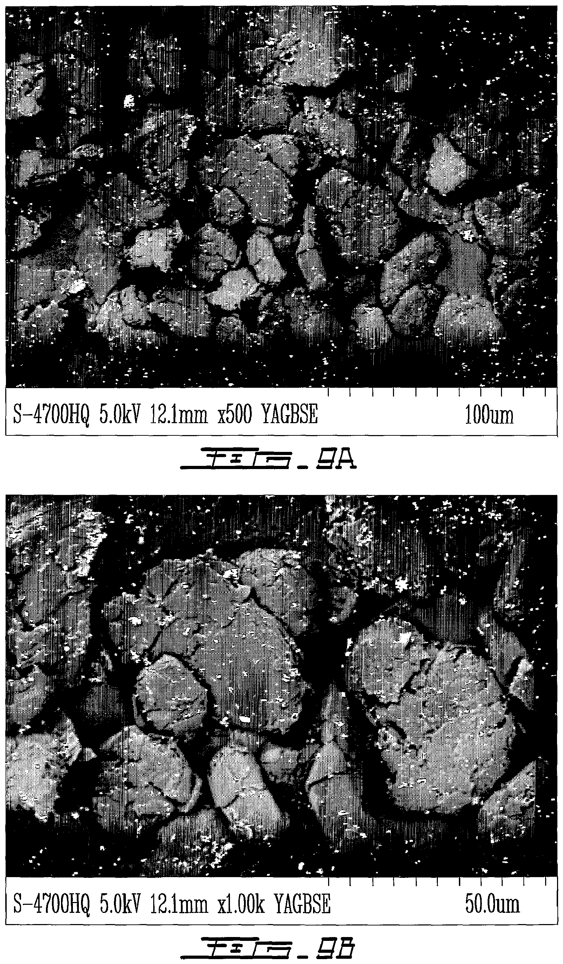

Les particules de graphite ainsi préparées sont partiellement couvertes, pour 10 à 30 % de leur surface par du silicium et de carbone amorphe. Elles sont visibles sur les photos portant le titre Figures 9A et 9B.

Le carbone amorphe est le résultat de la pyrolyse du polymère de type ERM. Ce carbone assure un double rôle, le premier rôle est de créer des ponts de conduction électronique entre le graphite et l'alliage de silicium, une fois que l'insertion du lithium dans le silicium est réalisée.

Le deuxième rôle du carbone est, grâce à la porosité du carbone ainsi formé à la surface des particules, d'absorber l'expansion volumique de l'alliage.

Par ailleurs, l'amélioration de l'homogénéité des mélanges de particules obtenus par le procédé de l'invention a été mis en évidence de la façon suivante.

On a procédé à un mélange classique de deux types de particules à savoir des particules de type Si ou Li₂Co₃ de répartition granulométrique 500 nm (d50) D10, 300 nm et D90, 1 micron avec des particules de graphite de répartition granulométrique 20 microns (d50) D10, 10 microns et D90 28 microns.

Le mélange ainsi obtenu de façon traditionnelle, par simple mélange, révèle lors d'une analyse granulométrique réalisée avec l'appareil MicroTrac X100 de la société Horiba, deux pics relatifs à des concentrations à 0.5 micron et à 20 microns.

Par contre, lorsqu'on réalise un cobroyage intime par Mécanofusion ou par Hybrideser selon le procédé de l'invention, l'analyse granulométrique révèle un seul pic à 20 microns.

Ces résultats mettent en évidence le fait que les particules de graphite sont complètement enrobées par des particules de Type Si ou Li₂Co₃. Par ailleurs, ces résultats expérimentaux révèlent une excellente force de contact entre les petites particules et le noyau de graphite.

Bien que la présente invention ait été décrite à l'aide de mises en œuvre spécifiques, il est entendu que plusieurs variations et modifications peuvent se greffer aux dites mises en œuvre, et la présente invention vise à couvrir de telles modifications, usages ou adaptations de la présente invention suivant en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Procédé de préparation d'un mélange homogène de particules enrobées comportant un noyau conducteur à base de graphite et au moins deux enrobages partiels ou complets de la surface dudit noyau, l'enrobage étant à base d'au moins deux agents fonctionnels interréactifs constitués d'un matériau différent dans sa composition et/ou dans sa forme physique du matériau constitutif du noyau des particules enrobées, ledit procédé comportant au moins une première étape de cobroyage des particules de graphite du noyau avec les particules d'un premier agent fonctionnel interréactif, les particules de graphite ayant une taille moyenne X et celles du premier agent fonctionnel interréactif ayant une taille moyenne Y telle que le rapport Y/X soit inférieur à 1, les particules enrobées obtenues dans la première étape de co-broyage étant soumises à un deuxième co-broyage en présence d'un agent fonctionnel interréactif identique ou différent du premier agent fonctionnel interréactif utilisé dans la première étape de co-broyage, la taille moyenne des particules du deuxième agent fonctionnel interréactif étant inférieure à celle des particules enrobées obtenues dans la première étape de co-broyage.

2. Procédé selon la revendication 1, dans lequel les agents fonctionnels interréactifs sont choisis dans le groupe constitué par :
- les graphites d'une forme différente de celle du ou des graphites constitutifs du noyau mais appartenant à la même classe de cristallinité ;
- les céramiques, de préférence les céramiques de type TiO₂, Al₂O₃, ZrO₂, SiC, Si₃N₄, plus préférentiellement encore celles de type TiO₂, et/ou ZrO₂ ;
- les sels fluorés tels que LiF ou les fluorures d'alcalino-terreux tels que (LiF)CaF₂ ;
- les métaux et les alliages, de préférence les alliages de type métallique, plus préférentiellement encore les alliages métalliques contenant un des éléments du groupe constitué par Si, Sn, Ag et Al ;
- les oxydes, de préférence les oxydes de type MgO, Li₂CO₃ et SiO₂ ;
- les polymères à l'état solide à température ambiante tels que :
- les polymères à quatre branches ayant de préférence des terminaisons hybrides, plus préférentiellement encore ceux ayant des terminaisons hybrides acrylates, de préférence méthacrylate et alkoxy, de préférence alkoxy avec de 1 à 8 atomes de carbone, plus préférentiellement encore méthoxy ou éthoxy, ou encore vinyle ; une branche au moins, et de préférence au moins deux branches, dudit polymère à quatre branches étant susceptible(s) de donner lieu à une réticulation,
- les polyoxydes de propylène et les polyoxydes d'éthylène d'un poids moléculaire moyen variant avantageusement de 150 à 20000,
- les polysiloxanes ([Si(R)-O]-) tels que ceux de type poly(dimethyl)siloxane, poly(ethoxysiloxane), poly(octamethyl)trisiloxane, ayant de préférence un poids moléculaire variant de 150 à 10000, plus préférentiellement encore les polyoxysiloxanesde type Poly(dimethylsiloxane-co-methylphenylsiloxane) ayant de préférence un poids moléculaire d'environ 800 ;et
- les mélanges d'au moins deux de ces derniers.

3. Procédé selon la revendication 1 ou 2, dans lequel la taille des particules soumises à cobroyage est choisie de façon que X soit supérieur pour au moins 150%, et de préférence pour au moins 200 % à Y.

4. Procédé selon l'une quelconque des revendications 1 à 3, dans lequel au moins 10 %, de préférence au moins 80 %, de la surface des noyaux est recouverte d'un enrobage.

5. Procédé selon l'une quelconque des revendications 1 à 4, dans lequel le mélange homogène de particules enrobées obtenu est **caractérisé par** une distribution granulométrique à un seul pic, de préférence lorsqu'on fait une mesure granulométrique à l'aide de l'appareil Microtrac X100 de la société MICROTRAC et/ou par un taux de conversion≥ 90 %.

6. Procédé selon l'une quelconque des revendications 1 à 5, dans lequel les étapes de cobroyage sont réalisées sous atmosphère inerte, de préférence constituée d'un gaz choisi dans le groupe constitué par l'argon et l'azote et les mélanges de ces gaz, plus préférentiellement encore en présence d'argon.

7. Procédé selon l'une quelconque des revendications 1 à 6, dans lequel les étapes de cobroyage sont réalisées à une température comprise entre 20 et 1000°Celsius, de préférence à une température comprise entre 25 et 800°Celsius.

8. Procédé selon l'une quelconque des revendications 1 à 7, dans lequel les étapes de cobroyage sont réalisées pendant une durée comprise entre 10 secondes et 4 heures, de préférence pendant une durée comprise entre 60 secondes et 3 heures.

9. Procédé selon l'une quelconque des revendications 1 à 8, dans lequel les étapes de cobroyage sont réalisées en présence d'un solvant choisi de préférence dans le groupe constitué par l'eau, les solvant organiques, les solvants inorganiques et les mélanges d'au moins deux de ces derniers, de préférence le solvant est choisi dans le groupe constitué par l'eau, les cétones, les alcènes, les alcanes et les alcools, plus préférentiellement encore le solvant est choisi dans le groupe constitué par l'eau, l'acétone, le toluène, l'heptane, le méthanol et les mélanges de ces derniers avec de l'eau.

10. Procédé selon l'une quelconque des revendications 1 à 9, dans lequel le solvant utilisé est l'eau.

11. Procédé selon la revendication 9 ou 10, dans lequel la quantité de solvant utilisé représente de 1 à 10 % et de préférence de 2 à 5 % du poids total des particules-enrobage présentes dans le mélange des particules soumis au co-broyage.

12. Procédé selon l'une quelconque des revendications 1 à 11, dans lequel les particules de taille X et/ou celles de taille Y ont une forme cylindrique, prismatique et/ou de palette.

13. Procédé selon l'une quelconque des revendications 1 à 12, dans lequel le rapport Y/X varie entre 0,17 et 0,6, de préférence ledit rapport varie entre 0,25 et 0,35.

14. Procédé selon l'une quelconque des revendications 1 à 13, dans lequel le cobroyage est réalisé mécaniquement, de préférence par HEBM, par jet air-miling, par mécanofusion de type Hosokawa, par hybridization et/ou par mise en œuvre d'une combinaison de ces techniques.

15. Procédé selon la revendication 14, réalisé par mécanofusion à une vitesse de rotation de l'installation comprise entre 2000 et 3000 tours/minute, et préférentiellement ladite vitesse de rotation est comprise entre 2300 et 2700 tours/minute.

16. Procédé selon la revendication 15, mis en œuvre pour une durée comprise entre 10 et 210 minutes, plus préférentiellement encore pour une durée qui est comprise entre 15 et 60 minutes.

17. Procédé selon l'une quelconque des revendications 1 à 16, dans lequel les particules du mélange obtenu ont une forme ellipsoïdale.

18. Procédé selon l'une quelconque des revendications 1 à 17, dans lequel la densité de compaction du mélange de particules obtenu est au moins 2 fois supérieure à celle des particules de taille X utilisées au démarrage dudit procédé.

19. Procédé selon la revendication 18, dans lequel la densité de compaction du produit final est > 0,9 g/cc, de préférence la densité de compaction est ≥ 1 g/cc.

20. Procédé selon l'une quelconque des revendications 1 à 19, dans lequel la surface spécifique (BET) des particules de taille X varie entre 1 et 50 m²/g, de préférence la surface spécifique est comprise entre 2 et 10 m²/g.

21. Procédé selon l'une quelconque des revendications 1 à 20, dans lequel la surface spécifique (BET) du graphite Y varie entre 5 et 800 m²/g, de préférence ladite surface spécifique varie entre 10 et 500 m²/g.

22. Procédé selon l'une quelconque des revendications 1 à 21, dans lequel les particules de taille moyenne Y sont des particules de céramique ci-après désignées particules de taille Yc.

23. Procédé selon la revendication 22, dans lequel le rapport Yc/X est inférieur à 1, de préférence ledit rapport est compris entre 0,0008 et 0,007.

24. Procédé selon la revendication 22 ou 23, dans lequel la céramique est électroniquement conductrice, de préférence choisie dans le groupe constitué par les nitrures, notamment TiN et GaN.

25. Procédé selon la revendication 21 ou 22, dans lequel la céramique est électroniquement non-conductrice et est, de préférence, choisie dans le groupe constitué par Al₂O₃ et BaTiO₃.

26. Procédé selon la revendication 21 ou 22, dans lequel la céramique est électroniquement semi-conductrice et est, de préférence, choisie dans le groupe constitué par SiC et BaTiO₃.

27. Procédé selon la revendication 22, dans lequel les particules de la céramique ont une taille moyenne Yc telle que 10 nm<Yc<1 µm, de préférence tel que 50 nm<Yc<150 nm.

28. Procédé selon l'une quelconque des revendications 1 à 20, dans lequel les particules de taille moyenne Y sont des particules d'un alliage, ci-après appelées particules de taille Ya, constituées au moins en partie de Al, Sn, Ag, Si ou d'un mélange d'au moins deux de ces derniers.

29. Procédé selon la revendication 28, dans lequel le rapport Ya/X est tel que 0,005>Ya/X>0,2, de préférence ledit rapport vérifie la relation 0,007>Ya/X>0,0008.

30. Procédé selon l'une quelconque des revendications 1 à 29, dans lequel les particules enrobées préparées comportent un noyau conducteur à base de graphite et au moins trois enrobages partiels ou complets dudit noyau, les particules enrobées obtenues dans la deuxième étape de co-broyage étant soumises à un troisième co-broyage en présence d'un agent fonctionnel interréactif identique ou différent des agents fonctionnels interréactifs utilisés dans les deux premières étapes de co-broyage, la taille moyenne des particules du troisième agent fonctionnel interréactif étant inférieure à celle des particules enrobées obtenues dans la deuxième étape de co-broyage.

31. Particule enrobée susceptible d'être obtenue par l'un des procédés selon l'une quelconque des revendications 1 à 29, **caractérisée en ce que** ladite particule comporte un noyau au moins partiellement constitué de graphite et recouvert de deux couches successives continues et/ou discontinues d'un matériau obtenu à partir d'au moins deux agents fonctionnels interréactifs sélectionnés dans le groupe constitué par les graphites, les céramiques, les métaux et les alliages, notamment les alliages de type métallique, ainsi que les mélanges d'au moins deux de ces derniers, chacune des couches ayant de préférence des épaisseurs respectives E1 et E2 comprises entre 50 nanomètres et 5 micromètres.

32. Particule selon la revendication 31, constituée d'un noyau de graphite d'une pureté supérieure à 95 %.

33. Particule selon la revendication 32, dans laquelle les impuretés présentes dans le noyau n'interférent pas avec les propriétés électroniques de ladite particule.

34. Particule selon la revendication 33, dans laquelle l'enrobage du noyau est constitué par un matériau différent de la ou des impureté(s) présente(s) dans le noyau de graphite et susceptibles de générer des réactions parasitaires.

35. Particule selon l'une quelconque des revendications 31 à 34, dans laquelle le noyau a une taille comprise entre 7 et 100 micromètres, de préférence la taille du noyau est comprise entre 10 et 30 micromètres.

36. Particule selon l'une quelconque des revendications 31 à 35, dans laquelle chacune des 2 couches est constituée d'un matériau différent.

37. Particule selon l'une quelconque des revendications 31 à 36, dans laquelle le noyau est recouvert de trois couches, chacune des 3 couches ayant respectivement une épaisseur E₁, E₂, E₃, comprise de préférence entre 50 nanomètres et 5 micromètres et les épaisseurs des trois couches étant telles que leur somme est de préférence inférieure à 10 micromètres.

38. Particule selon la revendication 37, dans laquelle chacune des 3 couches est constituée d'un matériau différent.

39. Mélange de particules telles que définies dans l'une des revendications 31 à 38 et ayant au moins une des propriétés suivantes :
- une conductivité électronique variant entre 10⁻²² et 10³ Ohm⁻¹.cm⁻¹ ; et
- une distribution granulométrique restreinte comprise entre [-50%,+50%], c'est-à-dire que les mélanges de particules X et de particules Y correspondants ne contiennent pas de particules dont la taille est supérieure ni inférieure pour plus e 50% à la taille X, respectivement à la taille Y.

40. Mélange de particules selon la revendication 39, dans lesquelles le noyau est constitué de graphite, l'enrobage est de type métallique et la conductivité électronique est supérieure à 300 Ohm⁻¹.cm⁻¹.

41. Mélange de particules selon la revendication 40, dans lesquelles l'enrobage est constitué d'aluminium et la conductivité électronique est supérieure à 350 Ohm⁻¹.cm⁻¹, de préférence supérieure à environ 377x103 Ohm⁻¹.cm⁻¹.

42. Utilisation d'un mélange de particules selon la revendication 41 comme matériau isolant ou conducteur pour électrode de générateur électrique.

43. Utilisation d'un mélange de particules selon la revendication 39, enrobées de CeO₂, Li₂PO₄, de graphite-Ag et/ou de MgO-graphite dans les piles à combustible.

44. Utilisation d'un mélange de particules selon la revendication 39, enrobées de polymères-graphites dans des revêtements, de préférence dans les peintures.

## Patentansprüche

1. Verfahren zur Herstellung eines homogenen Gemischs beschichteter Partikel, die einen leitenden Kern auf der Basis von Graphit aufweisen und mindestens eine teilweise oder vollständige Beschichtung der Oberfläche des Kerns, wobei die Beschichtung auf der Basis von mindestens zwei interreaktiven funktionellen Mitteln ist, die aus einem Material bestehen, das in seiner Zusammensetzung und/oder in seiner physikalischen Form unterschiedlich von dem Material ist, aus dem der Kerns der beschichteten Partikel besteht, wobei das Verfahren mindestens einen ersten Schritt des Co-Mahlens der Graphitpartikel des Kerns mit den Partikeln eines ersten interreaktiven funktionellen Mittels aufweist, wobei die Graphitpartikel eine mittlere Größe X haben und die des ersten interreaktiven funktionellen Mittels eine mittlere Größe Y haben, so dass das Verhältnis Y/X kleiner als 1 ist, wobei die im ersten Schritt des Co-Mahlens erhaltenen beschichteten Partikel einem zweiten Co-Mahlen in Anwesenheit eines interreaktiven funktionellen Mittels unterzogen werden, das mit dem ersten interreaktiven funktionellen Mittel identisch oder von diesem unterschiedlich ist, das beim ersten Schritt des Co-Mahlens verwendet wurde, wobei die mittlere Größe der Partikel des zweiten interreaktiven funktionellen Mittels kleiner als die der beschichteten Partikel ist, die im ersten Schritt des Co-Mahlens erhalten wurden.

2. Verfahren nach Anspruch 1, wobei die interreaktiven funktionellen Mittel aus der Gruppe ausgewählt sind, die besteht aus:
- den Graphiten einer Form, die von der des oder der Graphite unterschiedlich ist, die den Kern bilden, aber zu derselben Kristallinitätsklasse gehören;
- den Keramiken, vorzugsweise den Keramiken vom Typ TiO₂, Al₂O₃, ZrO₂, SiC, Si₃N₄, noch vorzugsweiser denen vom Typ TiO₂ und/oder ZrO₂;
- den Fluoridsalzen wie LiF oden erdalkalischen Fluoriden wie (LiF)CaF₂;
- den Metallen und den Legierungen, vorzugsweise den Legierungen vom Metalltyp, noch vorzugsweiser den Metalllegierungen, die eins der Elemente der Gruppe enthalten, die aus Si, Sn, Ag und Al besteht;
- den Oxiden, vorzugsweise den Oxiden vom Typ MgO, Li₂CO₃ und SiO₂;
- den Polymeren in festem Zustand bei Raumtemperatur, wie:
- den Polymeren mit vier Verzweigungen, die vorzugsweise hybridterminiert sind, noch vorzugsweiser denen, die acrylat-, vorzugsweise methacrylat- und alkoxyhybridterminiert sind, vorzugsweise alkoxy mit 1 bis 8 Kohlenstoffatomen, noch vorzugsweiser methoxy oder ethoxy oder auch vinyl; wobei mindestens eine Verzweigung und vorzugsweise mindestens zwei Verzweigungen des Polymers mit vier Verzweigungen imstande ist/sind, eine Vernetzung zu veranlassen,
- den Propylen-Polyoxiden und den Etylen-Polyoxiden mit einem mittleren Molekulargewicht, das in vorteilhafter Weise von 150 bis 20000 schwankt,
- den Polysiloxanen ([Si(R)-O]-) wie denen vom Typ Poly(dimethyl)siloxan, Poly(ethoxysiloxan), Poly(octamethyl)trisiloxan mit vorzugsweise einem Molekulargewicht, das von 150 bis 10000 schwankt, noch vorzugsweiser den Polyoxysiloxanen vom Typ Poly(dimethylsiloxan-co-methylphenylsiloxan) mit vorzugsweise einem Molekulargewicht von zirka 800; und
- den Gemischen aus mindestens zwei dieser Letzteren.

3. Verfahren nach Anspruch 1 oder 2, wobei die Größe der Partikel, die dem Co-Mahlen unterzogen werden, derart ausgewählt ist, dass X um mindestens 150 % und vorzugsweise um mindestens 200 % größer als Y ist.

4. Verfahren nach einem der Ansprüche 1 bis 3, wobei mindestens 10 %, vorzugsweise mindestens 80 %, de la Oberfläche des Kerns von einer Beschichtung bedeckt ist.

5. Verfahren nach einem der Ansprüche 1 bis 4, wobei das erhaltene homogene Gemisch beschichteter Partikel durch eine granulometrische Verteilung mit einer einzigen Spitze gekennzeichnet ist, vorzugsweise wenn eine granulometrische Messung mit Hilfe des Geräts Microtrac X100 der Firma MICROTRAC durchgeführt wird und/oder durch einen Umwandlungsgrad ≥ 90 %.

6. Verfahren nach einem der Ansprüche 1 bis 5, wobei die Schritte des Co-Mahlens in inerter Atmosphäre durchgeführt werden, vorzugsweise bestehend aus einem Gas, das aus der Gruppe ausgewählt ist, die aus dem Argon und dem Stickstoff und den Gemischen dieser Gase besteht, noch vorzugsweiser in Anwesenheit von Argon.

7. Verfahren nach einem der Ansprüche 1 bis 6, wobei die Schritte des Co-Mahlens bei einer Temperatur durchgeführt werden, die zwischen 20 und 1000 °Celsius liegt, vorzugsweise bei einer Temperatur, die zwischen 25 und 800 °Celsius liegt.

8. Verfahren nach einem der Ansprüche 1 bis 7, wobei die Schritte des Co-Mahlens während einer Dauer durchgeführt werden, die zwischen 10 Sekunden und 4 Stunden liegt, vorzugsweise während einer Dauer, die zwischen 60 Sekunden und 3 Stunden liegt.

9. Verfahren nach einem der Ansprüche 1 bis 8, wobei die Schritte des Co-Mahlens in Anwesenheit eines Lösungsmittels durchgeführt werden, das vorzugsweise aus der Gruppe ausgewählt ist, die aus dem Wasser, den organischen Lösungsmitteln, den anorganischen Lösungsmitteln und den Gemischen aus mindestens zwei von diesen besteht, wobei das Lösungsmittel vorzugsweise aus der Gruppe ausgewählt ist, die aus dem Wasser, den Ketonen, den Alkenen, den Alkanen und den Alkoholen besteht, wobei das Lösungsmittel noch vorzugsweiser aus der Gruppe ausgewählt ist, die aus dem Wasser, dem Aceton, dem Toluen, dem Heptan, dem Methanol und den Gemischen dieser Letzteren mit Wasser besteht.

10. Verfahren nach einem der Ansprüche 1 bis 9, wobei das verwendete Lösungsmittel Wasser ist.

11. Verfahren nach Anspruch 9 oder 10, wobei die verwendete Lösungsmittelmenge 1 bis 10 % und vorzugsweise 2 bis 5 % des Gesamtgewichts der Partikel-Beschichtung darstellt, die in dem Partikelgemisch vorhanden sind, das dem Co-Mahlen unterzogen wird.

12. Verfahren nach einem der Ansprüche 1 bis 11, wobei die Partikel der Größe X und/oder die der Größe Y eine zylindrische, prismatische und/oder Palettenform haben.

13. Verfahren nach einem der Ansprüche 1 bis 12, wobei das Verhältnis Y/X zwischen 0,17 und 0,6 schwankt, wobei das Verhältnis vorzugsweise zwischen 0,25 und 0,35 schwankt.

14. Verfahren nach einem der Ansprüche 1 bis 13, wobei das Co-Mahlen mechanisch, vorzugsweise durch Hochenergie-Kugelmahlen, durch Luftstrahlmahlen, durch Mechanofusion vom Typ Hosokawa, durch Hybridisieren und/oder durch Umsetzen einer Kombination dieser Techniken durchgeführt wird.

15. Verfahren nach Anspruch 14, durchgeführt durch Mechanofusion mit einer Rotationsgeschwindigkeit der Anlage, die zwischen 2000 und 3000 U/min liegt, wobei die Rotationsgeschwindigkeit vorzugsweise zwischen 2300 und 2700 U/min liegt.

16. Verfahren nach Anspruch 15, durchgeführt für eine Dauer, die zwischen 10 und 210 Minuten liegt, noch vorzugsweiser für eine Dauer, die zwischen 15 und 60 Minuten liegt.

17. Verfahren nach einem der Ansprüche 1 bis 16, wobei die Partikel des erhaltenen Gemischs eine Ellipsenform haben.

18. Verfahren nach einem der Ansprüche 1 bis 17, wobei die Kompaktierungsdichte des erhaltenen Partikelgemischs mindestens 2 Mal höher ist als die der Partikel der Größe X, die zu Beginn des Verfahrens verwendet werden.

19. Verfahren nach Anspruch 18, wobei die Kompaktierungsdichte des Endprodukts > 0,9 g/cc beträgt, wobei die Kompaktierungsdichte vorzugsweise ≥ 1 g/cc beträgt.

20. Verfahren nach einem der Ansprüche 1 bis 19, wobei die spezifische Oberfläche (BET) der Partikel der Größe X zwischen 1 und 50 m²/g schwankt, wobei die spezifische Oberfläche vorzugsweise zwischen 2 und 10 m²/g liegt.

21. Verfahren nach einem der Ansprüche 1 bis 20, wobei die spezifische Oberfläche (BET) des Graphits Y zwischen 5 und 800 m²/g schwankt, wobei die spezifische Oberfläche vorzugsweise zwischen 10 und 500 m²/g schwankt.

22. Verfahren nach einem der Ansprüche 1 bis 21, wobei die Partikel mittlerer Größe Y Keramikpartikel sind, die nachfolgend als Partikel der Größe Yc bezeichnet werden.

23. Verfahren nach Anspruch 22, wobei das Verhältnis Yc/X kleiner als 1 ist, wobei das Verhältnis vorzugsweise zwischen 0,0008 und 0,007 liegt.

24. Verfahren nach Anspruch 22 oder 23, wobei die Keramik elektronisch leitend ist, vorzugsweise ausgewählt aus der Gruppe, die aus den Nitriden besteht, insbesondere TiN und GaN.

25. Verfahren nach Anspruch 21 oder 22, wobei die Keramik elektronisch nichtleitend ist und vorzugsweise aus der Gruppe ausgewählt ist, die aus Al₂O₃ und BaTiO₃ besteht.

26. Verfahren nach Anspruch 21 oder 22, wobei die Keramik elektronisch halbleitend ist und vorzugsweise aus der Gruppe ausgewählt ist, die aus SiC und BaTiO₃ besteht.

27. Verfahren nach Anspruch 22, wobei die Partikel der Keramik eine mittlere Größe Yc haben, so dass 10 nm<Yc<1 µm, vorzugsweise derart, dass 50 nm<Yc<150 nm.

28. Verfahren nach einem der Ansprüche 1 bis 20, wobei die Partikel mittlerer Größe Y Partikel einer Legierung sind, nachfolgend als Partikel der Größe Ya bezeichnet, die mindestens zum Teil aus Al, Sn, Ag, Si oder einem Gemisch von mindestens zwei dieser Letzteren bestehen.

29. Verfahren nach Anspruch 28, wobei das Verhältnis Ya/X derart ist, dass 0,005>Ya/X>0,2 ist, wobei das Verhältnis vorzugsweise die Relation 0,007>Ya/X>0,0008 bestätigt.

30. Verfahren nach einem der Ansprüche 1 bis 29, wobei die hergestellten beschichteten Partikel einen leitenden Kern auf der Basis von Graphit und mindestens drei teilweise oder vollständige Beschichtungen des Kerns aufweisen, wobei die im zweiten Schritt des Co-Mahlens erhaltenen beschichteten Partikel einem dritten Co-Mahlen in Anwesenheit eines interreaktiven funktionellen Mittels unterzogen werden, das mit den interreaktiven funktionellen Mitteln identisch oder von diesen unterschiedlich ist, die bei den zwei ersten Schritten des Co-Mahlens verwendet wurden, wobei die mittlere Größe der Partikel des dritten interreaktiven funktionellen Mittels kleiner als die der beschichteten Partikel ist, die im zweiten Schritt des Co-Mahlens erhalten wurden.

31. Beschichteter Partikel, der nach einem der Verfahren nach einem der Ansprüche 1 bis 29 erhaltbar ist, **dadurch gekennzeichnet, dass** der Partikel einen Kern aufweist, der mindestens teilweise aus Graphit besteht und von zwei aufeinanderfolgenden kontinuierlichen und/oder diskontinuierlichen Schichten eines Materials bedeckt ist, das aus mindestens zwei interreaktiven funktionellen Mitteln erhalten ist, die aus der Gruppe ausgewählt sind, die aus den Graphiten, den Keramiken, den Metallen und den Legierungen besteht, insbesondere den Legierungen vom Metalltyp, sowie den Gemischen von mindestens zwei dieser Letzteren, wobei jede der Schichten vorzugsweise jeweilige Dicken E1 und E2 hat, die zwischen 50 Nanometer und 5 Mikrometer liegen.

32. Partikel nach Anspruch 31, bestehend aus einem Graphitkern mit einer Reinheit von über 95 %.

33. Partikel nach Anspruch 32, wobei die im Kern vorhandenen Unreinheiten nicht mit den elektronischen Eigenschaften des Partikels interferieren.

34. Partikel nach Anspruch 33, wobei die Beschichtung des Kerns aus einem Material besteht, das von der oder den Unreinheiten unterschiedlich ist, die in dem Graphitkern vorhanden ist/sind und imstande, parasitäre Reaktionen hervorzurufen.

35. Partikel nach einem der Ansprüche 31 bis 34, wobei der Kern eine Größe hat, die zwischen 7 und 100 Mikrometer liegt, wobei die Größe des Kerns vorzugsweise zwischen 10 und 30 Mikrometer liegt.

36. Partikel nach einem der Ansprüche 31 bis 35, wobei jede der zwei Schichten aus einem unterschiedlichen Material besteht.

37. Partikel nach einem der Ansprüche 31 bis 36, wobei der Kern von drei Schichten bedeckt ist, wobei jede der drei Schichten jeweils eine Dicke E₁, E₂, E₃ hat, die vorzugsweise zwischen 50 Nanometer und 5 Mikrometer liegt und die Dicken der drei Schichten derart sind, dass ihre Somme vorzugsweise unter 10 Mikrometer beträgt

38. Partikel nach Anspruch 37, wobei jede der drei Schichten aus einem unterschiedlichen Material besteht.

39. Partikelgemisch wie in einem der Ansprüche 31 bis 38 definiert und mit mindestens einer der folgenden Eigenschaften:
- einer elektronischen Leitfähigkeit, die zwischen 10⁻²² und 10³ Ohm⁻¹.cm⁻¹ schwankt; und
- einer beschränkten granulometrischen Verteilung, die zwischen [-50 %, +50 %] liegt, das heißt, dass die entsprechenden Gemische aus Partikeln X und aus Partikeln Y keine Partikel enthalten, deren Größe weder größer noch kleiner als über 50 % der Größe X beziehungsweise der Größe Y ist.

40. Partikelgemisch nach Anspruch 39, wobei der Kern aus Graphit besteht, wobei die Beschichtung vom Metalltyp ist und die elektronische Leitfähigkeit über 300 Ohm⁻¹.cm⁻¹ beträgt.

41. Partikelgemisch nach Anspruch 40, wobei die Beschichtung aus Aluminium besteht und die elektronische Leitfähigkeit über 350 Ohm⁻¹.cm⁻¹, vorzugsweise über zirka 377x103 Ohm⁻¹.cm⁻¹ beträgt.

42. Verwendung eines Partikelgemischs nach Anspruch 41 als Isolations- oder leitendes Material für eine Elektrode eines elektrischen Generators.

43. Verwendung eines Gemischs aus Partikeln nach Anspruch 39, die mit CeO₂, Li₂PO₄, Graphit-Ag und/oder MgO-Graphit beschichtet sind, in den Brennstoffzellen.

44. Verwendung eines Gemischs aus Partikeln nach Anspruch 39, die mit Polymer-Graphiten in Beschichtungen, vorzugsweise in Farben, beschichtet sind.

## Claims

1. Method for preparing a homogeneous mixture of coated particles comprising a graphite conductive core and at least two partial or full coatings on the surface of said core, the coating containing at least two inter-reactive functional agents composed of a material differing in composition and/or in physical shape from the constituent material of the core of the coated particles, said method comprising at least a first step for co-grinding the graphite particles of the core with the particles of a first inter-reactive functional agent, the particles of graphite having a mean size X and those of the first inter-reactive functional agent having a mean size Y such that the ratio Y/X is lower than 1, the coated particles obtained at the first co-grinding step being subjected to second co-grinding in the presence of an inter-reactive functional agent the same as or differing from the first inter-reactive functional agent used at the first co-grinding step, the mean size of the particles of the second inter-reactive functional agent being smaller than that of the coated particles obtained at the first co-grinding step.

2. The method according to claim 1, wherein the inter-reactive functional agents are selected from the group formed by:
- graphites of form differing from that of the constituent graphite(s) of the core but belonging to the same crystallinity class;
- ceramics, preferably ceramics of type TiO₂, Al₂O₃, ZrO₂, SiC, Si₃N₄, more preferably those of type TiO₂ and/or ZrO₂;
- fluorinated salts such as LiF or alkaline-earth fluorides such as (LiF)CaF₂;
- metals and alloys, preferably alloys of metal type, more preferably metal alloys containing one of the elements in the group formed by Si, Sn, Ag and Al;
- oxides, preferably oxides of type MgO, Li₂CO₃ and SiO₂;
- polymers in the solid state at ambient temperature, such as:
• four-branched polymers preferably having hybrid end groups, more preferably those having acrylate hybrid end groups, preferably methacrylate and alkoxy, preferably alkoxy with 1 to 8 carbon atoms, further preferably methoxy or ethoxy, or vinyl, at least one branch and preferably at least two branches of said four-branched polymer being able to give rise to crosslinking;
• propylene polyoxides and ethylene polyoxides of average molecular weight advantageously varying from 150 to 20000;
• polysiloxanes ([Si(R)-O]-) such as those of type poly(dimethyl)siloxane poly(ethoxysiloxane), poly(octamethyl)trisiloxane preferably having a molecular weight varying from 150 to 10000, more preferably polyoxysiloxanes of type poly(dimethyl siloxane-co-methylphenylsiloxane) preferably having a molecular weight of about 800; and
• mixtures of at least two of the latter.

3. The method according to claim 1 or 2, wherein the size of the particles subjected to co-grinding is selected so that X is higher than Y by at least 150 % and preferably by at least 200 %.

4. The method according to any of claims 1 to 3, wherein at least 10 %, preferably at least 80 %, of the surface of the cores is covered with a coating.

5. The method according to any of claims 1 to 4, wherein the homogeneous mixture obtained of coated particles is **characterized by** a particle size distribution having a single peak, preferably when particle size is measured with Microtrac X100 apparatus by MICROTRAC and/or by a conversion rate of ≥ 90 %.

6. The method according to any of claims 1 to 5, wherein the co-grinding steps are conducted in an inert atmosphere, preferably composed of a gas selected from the group formed by argon and nitrogen and mixtures of these gases, more preferably in the presence of argon.

7. The method according to any of claims 1 to 6, wherein the co-grinding steps are conducted at a temperature of between 20 and 1000 °Celsius, preferably at a temperature of between 25 and 800 °Celsius.

8. The method according to any of claims 1 to 7, wherein the co-grinding steps are conducted for a time of between 10 seconds and 4 hours, preferably for a time of between 60 seconds and 3 hours.

9. The method according to any of claims 1 to 8, wherein the co-grinding steps are conducted in the presence of a solvent preferably selected from the group formed by water, organic solvents, inorganic solvents and mixtures of at least two of the latter, preferably the solvent is selected from the group formed by water, ketones, alkenes, alkanes and alcohols, more preferably the solvent is selected from the group formed by water, acetone, toluene, heptane, methanol and mixtures thereof with water.

10. The method according to any of claims 1 to 9, wherein the solvent used is water.

11. The method according to claim 9 or 10, wherein the amount of solvent used represents from 1 to 10 %, preferably from 2 to 5 % by weight of the total weight of particles-coating contained in the mixture of particles subjected to co-grinding.

12. The method according to any of claims 1 to 11, wherein the particles of size X and/or those of size Y are of cylindrical, prismatic and/or flake shape.

13. The method according to any of claims 1 to 12, wherein the ratio Y/X varies between 0.17 and 0.6, preferably said ratio varies between 0.25 and 0.35.

14. The method according to any of claims 1 to 13, wherein co-grinding is performed mechanically, preferably by HEBM, by air jet milling, by Mechanofusion of Hosokawa type, by hybridization and/or implementation of a combination of these techniques.

15. The method according to claim 14, performed by Mechanofusion at a rotation speed of the installation of between 2000 and 3000 rpm, and preferably said rotational speed is between 2300 and 2700 rpm.

16. The method according to claim 15, implemented for a time of between 10 and 210 minutes, more preferably for a time of between 15 and 60 minutes.

17. The method according to any of claims 1 to 16 wherein the particles of the mixture obtained are of ellipsoid shape.

18. The method according to any of claims 1 to 17, wherein the compacting density of the mixture of particles obtained is at least twice higher than that of the particles of size X used at the start of the method.

19. The method according to claim 18, wherein the compacting density of the end product is > 0.9 g/cc, preferably the compacting density is ≥ 1 g/cc.

20. The method according to any of claims 1 to 19, wherein the specific surface area (BET) of the particles of size X varies between 1 and 50 m²/g, preferably the specific surface area is between 2 and 10 m²/g.

21. The method according to any of claims 1 to 20, wherein the specific surface area (BET) of graphite Y varies between 5 and 800 m²/g, preferably said specific surface area varies between 10 and 500 m²/g.

22. The method according to any of claims 1 to 21, wherein the particles of mean size Y are ceramic particles hereafter called particles of size Yc.

23. The method according to claim 22, wherein the ratio Yc/X is lower than 1, preferably said ratio is between 0.0008 and 0.007.

24. The method according to claim 22 or 23, wherein the ceramic is electronically conductive, preferably selected from the group composed of nitrides, TiN and GaN in particular.

25. The method according to claim 21 or 22, wherein the ceramic is electronically nonconductive and is preferably selected from the group composed of Al₂O₃ and BaTiO₃.

26. The method according to claim 21 or 22, wherein the ceramic is electronically semiconductive and is preferably selected from the group composed of SiC and BaTiO₃.

27. The method according to claim 22, wherein the ceramic particles have a mean size Yc such that 10 nm <Yc<1 µm, preferably such that 50 nm<Yc<150 nm.

28. The method according to any of claims 1 to 20, wherein the particles of mean size Y are particles of an alloy, hereafter called particles of size Ya, composed at least in part of Al, Sn, Ag, Si or of a mixture of at least two of the latter.

29. The method according to claim 28, wherein the ratio Ya/X is such that 0.005>Ya/X>0.2, preferably said ratio verifies the relationship 0.007>Ya/X>0.0008.

30. The method according to any of claims 1 to 29, wherein the prepared coated particles comprise a graphite conductive core and at least three partial or full coatings of said core, the coated particles obtained at the second co-grinding step being subjected to third co-grinding in the presence of an inter-reactive functional agent the same as or differing from the inter-reactive functional agents used at the two first co-grinding steps, the mean size of the particles of the third inter-reactive functional agent being smaller than that of the coated particles obtained at the second co-grinding step.

31. Coated particle able to be obtained with one of the methods according to any of claims 1 to 29, **characterized in that** said particle comprises a core at least partly composed of graphite and coated with two successive continuous and/or discontinuous layers of a material obtained from at least two inter-reactive functional agents selected from the group composed of graphite, ceramics, metals and alloys, in particular alloys of metal type, and mixtures of at least two of the latter, each of the layers preferably having respective thicknesses E1 and E2 of between 50 nanometres and 5 micrometres.

32. The particle according to claim 31, composed of a core of graphite having purity higher than 95 %

33. The particle according to claim 32, wherein the impurities present in the core do not interfere with the electronic properties of said particle.

34. The particle according to claim 33, wherein the coating of the core is composed of a material differing from the impurity(impurities) present in the graphite core and which may generate parasitic reactions.

35. The particle according to any of claims 31 to 34, wherein the size of the core is between 7 and 100 micrometres, preferably the core size is between 10 and 30 micrometres.

36. The particle according to any of claims 31 to 35, wherein each of the two layers is composed of a different material.

37. The particle according to any of claims 31 to 36, wherein the core is coated with three layers, each of the 3 layers having a respective thickness E₁, E₂, E₃ preferably of between 50 nanometres and 5 micrometres, and the thicknesses of the three layers being such that the sum thereof is preferably less than 10 micrometres.

38. The particle according to claim 37, wherein each of the three layers is composed of a different material.

39. Mixture of particles such as defined in one of claims 31 to 38 and having at least one of the following properties:
- electronic conductivity varying between 10⁻²² and 10³ Ohm⁻¹.cm⁻¹; and
- restricted particle size distribution of between [-50%, +50%] i.e. the corresponding mixtures of particles X and particles Y do not contain particles having a size that is more than 50 % greater or smaller than size X or size Y respectively.

40. The mixture of particles according to claim 39, wherein the core is composed of graphite, the coating is of metal type and electronic conductivity is higher than 300 Ohm⁻¹.cm⁻¹.

41. The mixture of particles according to claim 40, wherein the coating is composed of aluminium, and electronic conductivity is higher than 350 Ohm⁻¹.cm⁻¹, preferably higher than about 377x103 Ohm⁻¹.cm⁻¹.

42. Use of a mixture of particles according to claim 41 as insulating or conductive material for electric generator electrode.

43. Use of a mixture of particles according to claim 39 coated with CeO₂, Li₂PO₄, graphite-Ag and/or MgO-graphite, in fuel cells.

44. Use of a mixture of particles according to claim 39 coated with polymers-graphites, in surface coatings and preferably in paints.
